# EUROPEAN PATENT APPLICATION

(11) **EP 3 696 706 A1**
(43) Date of publication of application: **19.08.2020**
(21) Application number: 18866794.3
(22) Date of filing: 05.10.2018
(51) Int. Cl.: G06F 21/62

(54) **PSEUDO-DATA GENERATING DEVICE, METHOD AND PROGRAM**

(30) Priority: 13.10.2017 JP 2017199201
(71) Applicant: Nippon Telegraph And Telephone Corporation, Tokyo 100-8116 (JP)
(72) Inventor: OKADA, Rina, Musashino-shi Tokyo 180-8585 (JP); HASEGAWA, Satoshi, Musashino-shi Tokyo 180-8585 (JP); MASAKI, Shogo, Musashino-shi Tokyo 180-8585 (JP)
(74) Representative: MERH-IP Matias Erny Reichl Hoffmann Patentanwälte PartG mbB
(86) International application number: PCT/JP2018/037310
(87) International publication number: WO 2019/073913

(57) **Abstract**

A synthetic data generation apparatus includes: a random number generating unit that generates first synthetic data with a ratio of a frequency distribution of each attribute being approximate to the ratio of the frequency distribution of that attribute in target data for which synthetic data is to be generated; and a data formatting unit that formats the first synthetic data using a matrix given by Cholesky decomposition of a variance-covariance matrix of the target data or a scaling matrix given by singular value decomposition of the variance-covariance matrix of the target data such that a mean vector and a correlation matrix of the first synthetic data agree with a mean vector and a correlation matrix of the target data and that a minimum and a maximum of the first synthetic data are present in ranges of a minimum and a maximum of the target data, and provides the first synthetic data after formatting as synthetic data.

## Description

### [TECHNICAL FIELD]

The present invention relates to synthetic data generation techniques.

### [BACKGROUND ART]

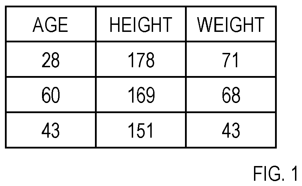

In the area of privacy protection, synthetic data as a substitute for personal information can be generated for analysis and the like when original data containing personal information cannot be handled due to concerns about security and the like. Consider here a case of creating synthetic data in tabular format from original data in tabular format. An example of data in tabular format is shown in Fig. 1.

Non-patent Literatures 1 and 2 are known as conventional techniques for creating synthetic data in tabular format from original data in tabular format. In a case of a table for which synthetic data to be created only has numerical attributes, these conventional techniques generate synthetic data by formatting random numbers so that they can maintain natures (such as variance-covariance, correlation, and mean vector) among attributes in the original data.

### [PRIOR ART LITERATURE]

### [NON-PATENT LITERATURE]

Non-patent Literature 1: Zhengli Huang, Wenliang Du, and Biao Chen. "Deriving private information from randomized data", In Proceedings of the 2005 ACM SIGMOD international conference on Management of data, pages 37-48. ACM, 2005.
Non-patent Literature 2: Haoran Li, Li Xiong, and Xiaoqian Jiang. "Differentially private synthesization of multi-dimensional data using copula functions", In Advances in database technology: proceedings. International Conference on Extending Database Technology, Vol. 2014, p. 475. NIH Public Access, 2014.

### [SUMMARY OF THE INVENTION]

### [PROBLEMS TO BE SOLVED BY THE INVENTION]

With this kind of conventional approaches, however, the mean vector and correlations can be maintained but frequency distribution or the maximum and minimum of each attribute are not maintained. Thus, they have the problem of a large discrepancy occurring between the original data and the synthetic data such as when data is visualized and analyzed.

An object of the present invention is to provide a synthetic data generation apparatus, a method for the same, and a program that are capable of generating synthetic data without a large discrepancy from the original data even when data is visualized and analyzed.

### [MEANS TO SOLVE THE PROBLEMS]

To attain the object, a synthetic data generation apparatus according to an aspect of the present invention includes: a random number generating unit that generates first synthetic data with a ratio of a frequency distribution of each attribute being approximate to the ratio of the frequency distribution of that attribute in target data for which synthetic data is to be generated; and a data formatting unit that formats the first synthetic data using a matrix given by Cholesky decomposition of a variance-covariance matrix of the target data or a scaling matrix given by singular value decomposition of the variance-covariance matrix of the target data such that a mean vector and a correlation matrix of the first synthetic data agree with a mean vector and a correlation matrix of the target data and that a minimum and a maximum of the first synthetic data are present in ranges of a minimum and a maximum of the target data, and provides the first synthetic data after formatting as synthetic data.

To attain the object, a synthetic data generation method according to another aspect of the present invention is for execution by the synthetic data generation apparatus and includes: a random number generating step of generating first synthetic data with a ratio of a frequency distribution of each attribute being approximate to the ratio of the frequency distribution of that attribute in target data for which synthetic data is to be generated; and a data formatting step of formatting the first synthetic data using a matrix given by Cholesky decomposition of a variance-covariance matrix of the target data or a scaling matrix given by singular value decomposition of the variance-covariance matrix of the target data such that a mean vector and a correlation matrix of the first synthetic data agree with a mean vector and a correlation matrix of the target data and that a minimum and a maximum of the first synthetic data are present in ranges of a minimum and a maximum of the target data, and providing the first synthetic data after formatting as synthetic data.

### [EFFECTS OF THE INVENTION]

The present invention has the effect of being able to generate synthetic data without a large discrepancy from the original data even when data is visualized and analyzed.

### [BRIEF DESCRIPTION OF THE DRAWINGS]

Fig. 1 shows an example of data in tabular format handled herein.
Fig. 2 is a functional block diagram of a synthetic data generation apparatus according to a first embodiment.
Fig. 3 shows an exemplary processing flow of the synthetic data generation apparatus according to the first embodiment.

### [DETAILED DESCRIPTION OF THE EMBODIMENTS]

An embodiment of the present invention is described below. In the drawings used in the following description, components having the same functions and steps that perform the same processing are given the same reference characters and overlapping description is avoided. In the following description, processing that is performed on each element of a vector or a matrix is intended to be applied to all the elements of the vector or matrix otherwise specified.

### <Outline of first embodiment

Look at a matrix Q which is given by Cholesky decomposition of a variance-covariance matrix for the original data. By multiplying the matrix Q by a proportionality coefficient p, synthetic data in which data are present in the ranges of the maximum and minimum of each attribute can be created while perfectly maintaining the mean vector and the correlation matrix of the original data and approximating the frequency distribution.

### <First embodiment

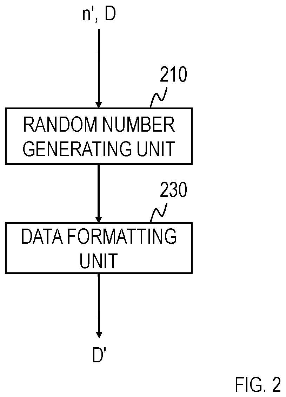

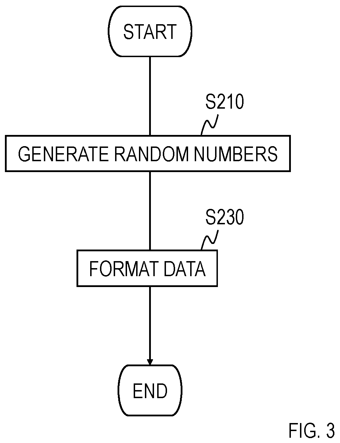

Fig. 2 shows a functional block diagram of a synthetic data generation apparatus according to a first embodiment, and Fig. 3 shows a processing flow of the apparatus.

The synthetic data generation apparatus according to the first embodiment includes a random number generating unit 210 and a data formatting unit 230.

The synthetic data generation apparatus is a special device configured by loading of a special program into a well-known or a dedicated computer having a central processing unit (CPU), main storage unit (random access memory: RAM), and the like, for example. The synthetic data generation apparatus executes various kinds of processing under control of the central processing unit, for example. Data input to the synthetic data generation apparatus and data resulting from processing are stored in the main storage unit, for example, and the data stored in the main storage unit is read into the central processing unit and utilized for other processing as necessary. The processing components of the synthetic data generation apparatus may be at least partially composed of hardware such as an integrated circuit. Storages of the synthetic data generation apparatus can include the main storage unit such as random access memory (RAM), auxiliary storage unit composed of a hard disk, an optical disk, or a semiconductor memory device such as flash memory, or middleware such as a relational database or a key value store, for example.

The synthetic data generation apparatus according to the first embodiment takes, as input, original data D and the number of records n' which is contained in synthetic data D' to be generated, and generates and outputs synthetic data D'. Here, the synthetic data D' ∈ R^{n'×d} perfectly maintains a mean vector µ_{D} and a correlation matrix of the original data D and approximates the frequency distribution, with data present in the ranges of the maximum and minimum of each attribute.

Data in tabular format such as the one shown in Fig. 1 is regarded as a matrix, and a row vector is called a record and a column vector is called an attribute. The original data D and the synthetic data D' can be different in the number of rows but are the same in the number of columns. The number of rows of the original data D is assumed to be n > 0, the number of rows of the synthetic data D' is assumed to be n' > 0, and the number of their columns is assumed to be d > 0. Assume that only numerical values that can be represented in a real number space R are stored in the original data D and the synthetic data D'. Hereinafter, a list in which the means of attributes are arranged in the same order as the order in the original data D will be referred to as mean vector µ. For example, the mean vector for the table data shown in Fig. 1 is: µ = (43.66,166,60.66)^{T}. Note that any vector without the indication of "row vector" shall be a "column vector".

The numerical attributes to which this embodiment is applicable include a date attribute. When this embodiment is applied to a date attribute, a target date in an original database is previously converted to a sequential value, such as m milliseconds earlier or m milliseconds later with respect to a particular date.

### <Random number generating unit 210>

Input: original data D ∈ R^{n×d} and the number of records to be generated n'
Output: first synthetic data X ∈ R^{n'×d}

The random number generating unit 210 generates first synthetic data X with the ratio of the frequency distribution of each attribute being approximate to the ratio of the frequency distribution of that attribute in the original data D (S210), and outputs it. The accuracy of approximation is related to the magnitude of the number of records n' contained in the synthetic data: the accuracy of approximation tends to be higher as n' is greater.

For example, the random number generating unit 210 first calculates a frequency distribution {hi}^{d}ᵢ₌₁ of each attribute in the original data D.

Next, the random number generating unit 210 randomly generates an ith column vector so that the ratio of the frequency distribution of the ith attribute for the first synthetic data X is approximate to the ratio of frequency distribution hi for the original data D. This operation is repeated for i of 1 through d. For a way of generating column vectors, various known techniques can be employed. For example, the rejection method or the inverse function method known from Reference Literature 1 or the like may be employed.

### (Reference Literature 1) Kazumasa Wakimoto, "Knowledge of Random Numbers", Morikita Publishing Co., Ltd., 1970, p.61-71

The random number generating unit 210 arranges the d generated column vectors in the same order as the order in the original data D and outputs it as the first synthetic data X in tabular format.

### <Data formatting unit 230>

Input: original data D ∈ R^{n×d} and the first synthetic data X ∈ R^{n'×d}
Output: synthetic data D' ∈ R^{n'×d}

The data formatting unit 230 formats the first synthetic data X (S230) using a matrix given by Cholesky decomposition of the variance-covariance matrix for the original data D such that the mean vector µ and the correlation matrix of the first synthetic data X agree with the mean vector µ_{D} and the correlation matrix of the original data D and that the minimum and maximum of the first synthetic data X are present in the ranges of the minimum and maximum of the original data D, and outputs the first synthetic data after formatting as the synthetic data D'.

For instance, the first synthetic data X is formatted in processes 1 to 11 below.
1. Set variable p = 1. The variable p is also called a proportionality coefficient.
2. Set R⁽ⁱ⁾_{D} as the range of values that can be assumed by each ith attribute in the original data D. This operation is repeated for i of 1 through d.
3. Calculate the mean vector µ and the variance-covariance matrix Σ of the first synthetic data X.
4. Calculate Q that satisfies Σ = QQ^{T}. For a way of calculating Q and Q^{T}, Cholesky decomposition can be used, for example.
5. For all r ∈ X, calculate r = Q⁻¹(r-µ). That is, update the record r contained in the first synthetic data X with r = Q⁻¹(r-µ).
6. Combine all the records r ∈ R^{d} thus calculated into Z' ∈ R^{n'×d}
7. Calculate the mean vector µ_{D} and the variance-covariance matrix Σ_{D} of the original data D.
8. Calculate Q_{D} that satisfies Σ_{D} = Q_{D}Q_{D}^{T}. This processing is equivalent to processing to apply Cholesky decomposition to the variance-covariance matrix Σ_{D} of the original data D, where Q_{D} is a matrix given by Cholesky decomposition of the variance-covariance matrix Σ_{D}.
9. Calculate Y = X(p·Q_{D})^{T}+I diag(µ_{D}). The I here is the identity matrix, and diag(µ_{D}) is a diagonal matrix with diagonal components being the elements of the mean vector µ_{D} and the other components being 0. p²·Σ_{D}= p²·Q_{D}Q_{D}^{T}=(p·Q_{D})(p·Q_{D})^{T} is called a correlation matrix, and p²·Σ_{D}= p²·Q_{D}Q_{D}^{T}= (p·Q_{D})(p·Q_{D})^{T} when p = 1 is also called a variance-covariance matrix. By generating synthetic data while calculating X(p·Q_{D})^{T}, the first synthetic data X can be formatted such that the correlation matrix of the first synthetic data X agrees with the correlation matrix of the original data D. Also, by generating synthetic data while calculating I diag(µ_{D}), the first synthetic data X can be formatted such that the mean vector of the first synthetic data X agrees with the mean vector of the original data D.
10. Set R⁽ⁱ⁾_{Y} as the range of values that can be assumed by each ith attribute in the above-described Y. This operation is repeated for i of 1 through d.
11. If R⁽ⁱ⁾_{Y} is not outside the range of R⁽ⁱ⁾_{D} for all i, output Y as synthetic data D'. In other words, Y is output as synthetic data D' when every R_{Y}⁽ⁱ⁾ is within the range of R_{D}⁽ⁱ⁾. When R⁽ⁱ⁾_{Y} is outside the range of R⁽ⁱ⁾_{D}, go back to the process 9 with p = p/2. An updating formula for the variable p can be any formula that makes the variable p smaller than the current p in the range of a set R+ of all the non-negative real numbers. In other words, α is set at any real number greater than 1 and p = p/α.

### <Effects>

The configuration described above can generate synthetic data D' in which data are present in the ranges of the maximum and minimum of each attribute while perfectly maintaining the mean vector and the correlation matrix of the original data D and approximating the frequency distribution. This allows the generated synthetic data D' to perfectly maintain the mean vector and the correlation matrix of the original data D, thus enabling the obtainment of exactly the same linear regression model as with the original data D. Particularly when the attributes in the original data D have similar ranges of values that they can assume, an approximation of the frequency distribution and the maximum/minimum of each attribute in the original data D can be maintained. Thus, synthetic data D' without a large discrepancy from the original data D can be generated even when data is visualized and analyzed. For example, without a record having a profile of height -170 cm being generated, the frequency distribution of attributes in the original data D can be approximated.

### <Modifications>

When there is no original data D but there is data to be reproduced (target data for which synthetic data is to be generated) in this embodiment, statistics of the target data (such as the frequency distribution of attributes, the mean vector, variance-covariance matrix, and the range of values that can be assumed by each attribute) may be used as input instead of the original data D. The original data D can also be considered as an example of the target data.

Although in this embodiment the frequency distribution of attributes in the original data D, the mean vector, the variance-covariance matrix, and the range of values that can be assumed by each attribute (the maximum and the minimum) are calculated in each unit, they may be calculated outside the units in advance and given as the input to the random number generating unit 210 and the data formatting unit 230 so that no calculation is performed in the units.

Although the first synthetic data X is formatted with Cholesky decomposition at the data formatting unit 230 in this embodiment, the first synthetic data X may be formatted with singular value decomposition. An example of such processing is described. For example, processing similar to this embodiment is performed for processes 1 to 7, 10, and 11, and processing is performed as follows in processes 8 and 9. 8. Calculate U_{D} and Λ_{D} that satisfy ∑_{D} = U_{D}Λ_{D}U^{T}_{D}. U_{D} is a matrix made from eigenvectors. Λ_{D} is a diagonal matrix with the diagonal components being eigenvalues and the other components being 0, and is also called a scaling matrix. This processing is equivalent to processing that applies singular value decomposition to the variance-covariance matrix Σ_{D} of the original data D and determines U_{D} and the scaling matrix Λ_{D}. Further, Λ_{D}^{1/2} is calculated. Λ_{D}^{1/2} is a matrix given by squaring all of the diagonal components of the scaling matrix Λ_{D}. Q_{D} in the above embodiment corresponds to U_{D}Λ_{D}^{1/2} in this modification.
9. Calculate Y = X(p·U_{D}Λ_{D}^{1/2})^{T}+I diag(µ_{D}). Σ_{D} = p²·U_{D}Λ_{D}U_{D}^{T} = (p·U_{D}Λ_{D}^{1/2})(p·U_{D}Λ_{D}^{1/2})^{T} is called a correlation matrix, and Σ = p²·U_{D}Λ_{D}U_{D}^{T} = (p·U_{D}Λ_{D}^{1/2})(p·U_{D}Λ_{D}^{1/2})^{T} when p = 1 is also called a variance-covariance matrix. By generating synthetic data while calculating X(p·U_{D}Λ_{D}^{1/2})^{T}, the first synthetic data X can be formatted such that the correlation matrix of the first synthetic data X agrees with the correlation matrix of the original data D.

Similarly in process 4, singular value decomposition may be used instead of Cholesky decomposition. That is, the following process 4 is performed. 4. Calculate U and A that satisfy Σ = UΛU^{T}. U is a matrix made from eigenvectors. A is a diagonal matrix with the diagonal components being eigenvalues and the other components being 0, and is also called a scaling matrix. This processing is equivalent to processing that applies singular value decomposition to the variance-covariance matrix Σ of the first synthetic data and determines U and the scaling matrix A. Further, Λ^{1/2} is calculated. Λ^{1/2} is a matrix given by squaring all of the diagonal components of the scaling matrix A. In and after process 4, processing is performed with Q = U^{1/2}.

In theory, a variance-covariance matrix is a positive definite matrix, so that it is possible to calculate Q and Q_{D} that give Σ = QQ^{T} and Σ_{D} = Q_{D}Q_{D}^{T} by Cholesky decomposition. In numerical calculations on a computer, however, Q and Q_{D} often become unstable and cannot be calculated when the number of records n in the original data or the number of records n' in X is small. Thus, rather than determining Q and Q_{D} directly by Cholesky decomposition, Q = UΛ^{1/2} and Q_{D} = U_{D}Λ_{D}^{1/2} can be calculated by calculating U and A, and U_{D} and Λ_{D} by singular value decomposition.

The above processing provides similar effects to the first embodiment.

### <Other modifications>

The present invention is not limited to the above embodiment and modifications. For example, the above-described various kinds of processing may be executed, in addition to being executed in chronological order in accordance with the descriptions, in parallel or individually depending on the processing power of an apparatus that executes the processing or when necessary. In addition, changes may be made as appropriate without departing from the spirit of the present invention.

### <Program and recording medium>

Further, various types of processing functions in the apparatuses described in the above embodiment and modifications may be implemented on a computer. In that case, the contents of processing function to be contained in each apparatus are written by a program. With this program executed on the computer, various types of processing functions in the above-described apparatuses are implemented on the computer.

This program in which the contents of processing are written can be recorded in a computer-readable recording medium. The computer-readable recording medium may be any medium such as a magnetic recording device, an optical disk, a magneto-optical recording medium, and a semiconductor memory.

Distribution of this program is implemented by sales, transfer, rental, and other transactions of a portable recording medium such as a DVD and a CD-ROM on which the program is recorded, for example. Furthermore, this program may be distributed by storing the program in a storage device of a server computer and transferring the program from the server computer to other computers via a network.

A computer which executes such program first stores the program recorded in a portable recording medium or transferred from a server computer once in a storage thereof, for example. When the processing is performed, the computer reads out the program stored in the storage thereof and performs processing in accordance with the program thus read out. As another execution form of this program, the computer may directly read out the program from a portable recording medium and perform processing in accordance with the program. Furthermore, each time the program is transferred to the computer from the server computer, the computer may sequentially perform processing in accordance with the received program. Alternatively, a configuration may be adopted in which the transfer of a program to the computer from the server computer is not performed and the above-described processing is executed by so-called application service provider (ASP)-type service by which the processing functions are implemented only by an instruction for execution thereof and result acquisition. It should be noted that the program includes information which is provided for processing performed by electronic calculation equipment and which is equivalent to a program (such as data which is not a direct instruction to the computer but has a property specifying the processing performed by the computer).

Moreover, the apparatuses are assumed to be configured with a predetermined program executed on a computer. However, at least part of these processing contents may be realized in a hardware manner.

## Claims

1. A synthetic data generation apparatus comprising:
a random number generating unit that generates first synthetic data with a ratio of a frequency distribution of each attribute being approximate to the ratio of the frequency distribution of that attribute in target data for which synthetic data is to be generated; and
a data formatting unit that formats the first synthetic data using a matrix given by Cholesky decomposition of a variance-covariance matrix of the target data or a scaling matrix given by singular value decomposition of the variance-covariance matrix of the target data such that a mean vector and a correlation matrix of the first synthetic data agree with a mean vector and a correlation matrix of the target data and that a minimum and a maximum of the first synthetic data are present in ranges of a minimum and a maximum of the target data, and provides the first synthetic data after formatting as synthetic data.

2. The synthetic data generation apparatus according to Claim 1,
wherein where α is any real number greater than 1 and I is an identity matrix, the data formatting unit determines a mean vector µ and a variance-covariance matrix Σ of the first synthetic data, updates a record r contained in the first synthetic data with r = Q⁻¹(r-µ) using a matrix Q calculated based on the variance-covariance matrix Σ, sets the mean vector and the variance-covariance matrix of the target data as µ_{D} and Σ_{D}, respectively, calculates Q_{D} that satisfies Σ_{D} = Q_{D}Q_{D}^{T}, calculates Y = X(p·Q_{D})^{T}+I diag(µ_{D}), if a range R_{Y}⁽ⁱ⁾ that can be assumed by each ith attribute in Y is outside a range R_{D}⁽ⁱ⁾ that can be assumed by the ith attribute in the target data, sets p = p/α and recalculates Y = X(p·Q_{D})^{T}+I diag(µ_{D}), and if every one of the range R_{Y}⁽ⁱ⁾ is within the range R_{D}⁽ⁱ⁾, provides Y as the synthetic data.

3. The synthetic data generation apparatus according to Claim 1,
wherein where α is any real number greater than 1 and I is an identity matrix, the data formatting unit determines a mean vector µ and a variance-covariance matrix Σ of the first synthetic data, updates a record r contained in the first synthetic data with r = Q⁻¹(r-µ) using a matrix Q calculated based on the variance-covariance matrix Σ, sets the mean vector and the variance-covariance matrix of the target data as µ_{D} and Σ_{D}, respectively, calculates U_{D} and Λ_{D} that satisfy Σ_{D} = U_{D}Λ_{D}U_{D}^{T}, calculates Y = X(p·U_{D}Λ_{D}^{1/2})^{T}+I diag(µ_{D}), if a range R_{Y}⁽ⁱ⁾ that can be assumed by each ith attribute in Y is outside a range R_{D}⁽ⁱ⁾ that can be assumed by the ith attribute in the target data, sets p = p/α and recalculates Y = X(p·U_{D}Λ_{D}^{1/2})^{T}+I diag(µ_{D}), and if every one of the range R_{Y}⁽ⁱ⁾ is within the range R_{D}⁽ⁱ⁾, provides Y as the synthetic data.

4. The synthetic data generation apparatus according to Claim 2 or 3, wherein the data formatting unit calculates Q that satisfies Σ = QQ^{T} by Cholesky decomposition or calculates U and A that satisfy Σ = UΛU^{T} by singular value decomposition, and sets Q = UΛ^{1/2}.

5. A synthetic data generation method for execution by a synthetic data generation apparatus, the synthetic data generation method comprising:
a random number generating step of generating first synthetic data with a ratio of a frequency distribution of each attribute being approximate to the ratio of the frequency distribution of that attribute in target data for which synthetic data is to be generated; and
a data formatting step of formatting the first synthetic data using a matrix given by Cholesky decomposition of a variance-covariance matrix of the target data or a scaling matrix given by singular value decomposition of the variance-covariance matrix of the target data such that a mean vector and a correlation matrix of the first synthetic data agree with a mean vector and a correlation matrix of the target data and that a minimum and a maximum of the first synthetic data are present in ranges of a minimum and a maximum of the target data, and providing the first synthetic data after formatting as synthetic data.

6. The synthetic data generation method according to Claim 5,
wherein where α is any real number greater than 1 and I is an identity matrix, the data formatting step determines a mean vector µ and a variance-covariance matrix Σ of the first synthetic data, updates a record r contained in the first synthetic data with r = Q⁻¹(r-µ) using a matrix Q calculated based on the variance-covariance matrix Σ, sets the mean vector and the variance-covariance matrix of the target data as µ_{D} and Σ_{D}, respectively, calculates Q_{D} that satisfies Σ_{D} = Q_{D}Q_{D}^{T}, calculates Y = X(p·Q_{D})^{T}+I diag(µ_{D}), if a range R_{Y}⁽ⁱ⁾ that can be assumed by each ith attribute in Y is outside a range R_{D}⁽ⁱ⁾ that can be assumed by the ith attribute in the target data, sets p = p/α and recalculates Y = X(p·Q_{D})^{T}+I diag(µ_{D}), and if every one of the range R_{Y}⁽ⁱ⁾ is within the range R_{D}⁽ⁱ⁾, provides Y as the synthetic data.

7. The synthetic data generation method according to Claim 6,
wherein the data formatting step calculates Q that satisfies Σ = QQ^{T} by Cholesky decomposition or calculates U and A that satisfy Σ = UΛU^{T} by singular value decomposition, and sets Q = UΛ^{1/2}.

8. A program for causing a computer to function as the synthetic data generation apparatus according to any one of Claims 1 to 4.
